# DEMANDE DE BREVET EUROPEEN

(11) **EP 0 769 711 A1**
(43) Date de publication de la demande: **23.04.1997**
(21) Numéro de dépôt: 96402207.3
(22) Date de dépôt: 16.10.1996
(51) Int. Cl.: G02B 6/44

(54) **Unité optique pour câble de télécommunications à fibres optiques, et câble à fibres optiques comprenant une telle unité**

(30) Priorité: 20.10.1995 FR 9512367
(71) Demandeur: Alcatel Cable France, F-92110 Clichy (FR)
(72) Inventeur: Gaillard, Pierre, 92800 Puteaux (FR)
(74) Mandataire: Feray, Valérie

(57) **Abrégé**

La présente invention concerne une unité optique (5') pour un câble de télécommunications à fibres optiques (30 ; 40), comprenant un tube (3') en un matériau plastique dans lequel est logée librement au moins une fibre optique (2), **caractérisée en ce que** ledit tube (3') a une épaisseur inférieure ou égale à 0,5 mm et en ce que ledit matériau a un module d'élasticité inférieur à 1500 MPa à 20°C et une courbe contrainte/allongement sans seuil d'écoulement.

## Description

La présente invention conceme de manière générale une unité contenant des fibres optiques, destinée à être utilisée dans un câble de télécommunications à fibres optiques ; elle concerne plus particulièrement le matériau du tube et les dimensions d'une telle unité contenant les fibres optiques.

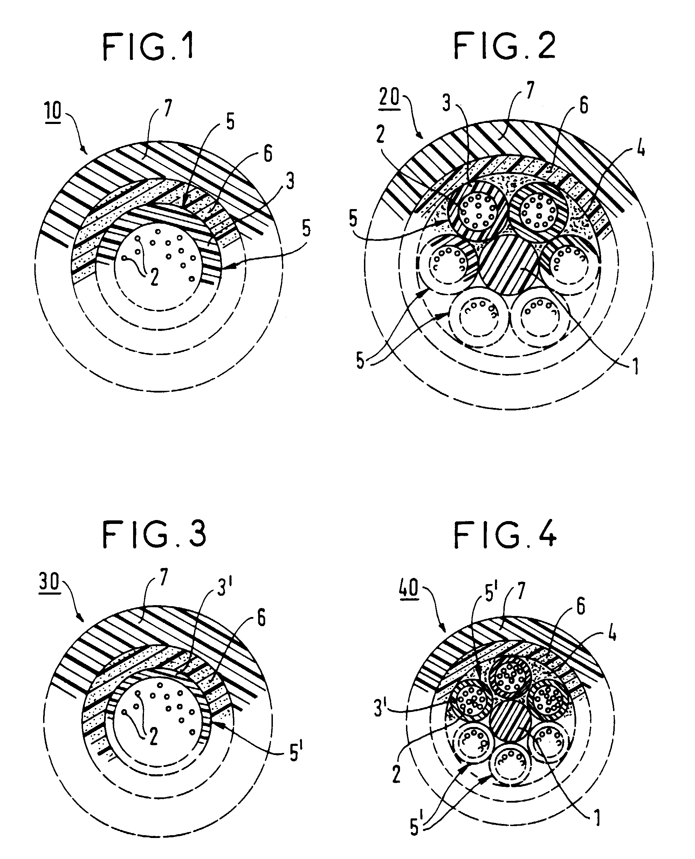

Les figures 1 et 2 montrent en coupe transversale deux câbles connus respectivement à structure dite Unitube® (figure 1) et à structure dite "stranded loose tube" (figure 2). Un câble connu de structure "stranded loose tube" est décrit par exemple dans le document FR-2 280 911.

Les câbles à fibres optiques 10 et 20 comprennent des fibres optiques 2 sous forme de faisceaux ou de rubans, logées librement dans un tube 3 dont l'axe longitudinal est celui du câble (structure Unitube®) ou dans plusieurs tubes 3 enroulés autour d'un élément de renfort central 1 en un matériau diélectrique (structure "stranded loose tube"). Une unité optique 5 comprend un tube 3 et la ou les fibres optiques 2 qu'il contient.

Autour de l'unité 5 du câble 10 à structure Unitube® ou de l'ensemble des unités 5 du câble 20 à structure "stranded loose tube" sont disposées successivement une couche de renfort mécanique 6 constituée par exemple d'éléments de renfort diélectriques et une gaine extérieure de protection 7 en un matériau isolant. En outre, l'espace libre entre les unités 5 du câble 20 peut être rempli d'un matériau 4 assurant l'étanchéité longitudinale ou contenir des éléments gonflant en présence de liquide pour assurer cette étanchéité.

Le ou les tubes 3 des unités 5 contenant les fibres optiques 2 sont, de manière connue, en un matériau dur et rigide, tel que le polyéthylène haute densité (PEHD) ou le polybutylène téréphtalate (PBT) ; ils peuvent également être constitués d'une double couche polybutylène téréphtalate/polycarbonate (PBT/PC). Selon le document FR-2 280 911, les tubes de la structure stranded loose tube peuvent également être en polyéthylène ou en polypropylène.

Le module d'élasticité du matériau constituant les tubes 3 dans les câbles connus 10 ou 20 est en général élevé, de l'ordre de 2400 à 2600 MPa à 20°C. De tels tubes confèrent une bonne protection mécanique aux fibres optiques 2, notamment contre les efforts de compression radiaux. Lorsque ce module d'élasticité est plus faible, les tubes doivent avoir une épaisseur assez importante pour assurer au câble une bonne résistance à la compression radiale. Dans ce cas, l'épaisseur des tubes 3 est relativement importante (typiquement de l'ordre de 0,5 mm pour les structures "stranded loose tube" et 0,75 mm pour les structures Unitube®). Ainsi, les câbles 10 ou 20 obtenus sont soit très encombrants, soit rigides, soit les deux à la fois, et en conséquence difficiles à manipuler.

Par ailleurs, bien qu'un tube 3 d'un matériau à module d'élasticité élevé confère une bonne protection mécanique contre les efforts de compression radiaux, il est détérioré de façon irréversible lorsqu'une contrainte de compression radiale (écrasement ou choc) dépassant un seuil limite lui est appliquée.

De plus, lorsque une unité de l'art antérieur subit une contrainte de flexion, elle peut être victime de l'effet de paille. Cet effet s'accroît avec la dureté des tubes 3 pour un rapport diamètre extérieur à diamètre intérieur donné.

Enfin, dans les câbles 20 à structure "stranded loose tube", du fait de la "mémoire" des tubes 3, due à leur enroulement autour de l'élément de renfort central 1, les opérations d'épissure sont malaisées.

Le but de la présente invention est donc de surmonter les inconvénients provenant de l'utilisation de matériaux rigides tout en évitant ceux de l'utilisation de tubes d'épaisseur importante. Notamment, le but de l'invention est de permettre la réalisation de câbles moins encombrants et plus faciles à manipuler que ceux de l'art antérieur.

A cette fin, l'invention propose d'utiliser des matériaux souples et élastiques pour le tube de la ou des unités de fibres optiques ; elle propose en particulier une unité optique pour un câble de télécommunications à fibres optiques, comprenant un tube en un matériau plastique dans lequel est logée librement au moins une fibre optique, **caractérisée en ce que** ledit tube a une épaisseur inférieure ou égale à 0,5 mm et en ce que ledit matériau a un module d'élasticité inférieur à 1500 MPa à 20°C et une courbe contrainte/allongement sans seuil d'écoulement.

De préférence l'épaisseur du tube est inférieure ou égale à 0,3 mm dans un câble à structure "stranded loose tube" et à 0,5 mm dans un câble à structure Unitube®

En utilisant un matériau souple et élastique et une faible épaisseur pour le tube, un câble contenant une ou plusieurs des unités de l'invention est plus souple qu'un câble utilisant les unités de l'art antérieur, ce qui rend sa manipulation plus facile.

De manière surprenante, même si le matériau constituant le ou les tubes a un faible module d'élasticité et le ou les tubes une faible épaisseur, ces demiers ne sont pas détériorés lorsqu'une contrainte de compression radiale (écrasement ou choc) leur est appliquée. En effet, dans une unité selon l'invention, le tube revient à sa forme initiale par élasticité après relâchement de la contrainte.

De plus, les unités de l'invention résistent mieux à l'effet de paille que des unités comprenant des tubes plus rigides.

En outre, l'épaisseur réduite du tube par rapport à l'art antérieur permet à un câble contenant une ou plusieurs unités selon l'invention d'être moins encombrant.

Du fait de leur souplesse, la "mémoire" des tubes selon l'invention est très réduite ce qui facilite les opérations d'épissure des câbles à structure "stranded loose tube".

Enfin, le choix du matériau selon l'invention qui autorise un dimensionnement réduit des câbles, conduit à une réduction de coût de ces derniers.

D'autres caractéristiques et avantages de la présente invention apparaîtront plus clairement à la lecture de la description suivante, en référence aux dessins annexés correspondants, dans lesquels :
- la figure 1 montre schématiquement en coupe partielle un câble à structure Unitube® de l'art antérieur,
- la figure 2 montre schématiquement en coupe partielle un câble à structure "stranded loose tube" de l'art antérieur,
- la figure 3 montre schématiquement en coupe partielle un câble à structure Unitube® selon la présente invention,
- la figure 4 montre schématiquement en coupe partielle un câble à structure "stranded loose tube" selon la présente invention,
- la figure 5 montre la contrainte en fonction de l'allongement pour un matériau utilisable pour un tube selon l'invention.

Dans toutes ces figures, les éléments communs portent les mêmes numéros de référence. Ces figures ont toutes été représentées à la même échelle.

Les figures 1 et 2 ont été décrites en relation avec l'état de la technique.

La figure 3 montre en coupe transversale un câble 30 de télécommunications à fibres optiques de structure Unitube® comprenant une unité optique 5' suivant la présente invention. Le câble 30 est construit de la même façon que le câble 10 de la figure 1 et comporte le même nombre de fibres optiques, la différence étant que le matériau utilisé pour le tube 3' est souple et qu'il peut avoir une épaisseur inférieure à celle du tube 3 du câble 10 de la figure 1.

La figure 4 montre en coupe transversale un câble 40 de télécommunications à fibres optiques comprenant une pluralité d'unités optiques 5' suivant la présente invention. Le câble 40 est construit de la même façon que le câble 20 de la figure 2 et comporte le même nombre de fibres optiques 2, la différence étant que le matériau utilisé pour les tubes 3' est souple et qu'ils peuvent avoir une épaisseur inférieure à celle du câble 20 de la figure 2.

Le matériau du ou des tubes 3' a un module d'élasticité inférieur à 1500 MPa à 20°C, et de préférence l'épaisseur des tubes 3' est inférieure ou égale à 0,5 mm (de préférence inférieure ou égale à 0,3 mm dans le câble 40 et à 0,5 mm dans le câble 30). Un matériau comme le polyéthylène, le polypropylène ou le Polychlorure de Vinyle (PVC) peut par exemple être utilisé pour le ou les tubes 3'.

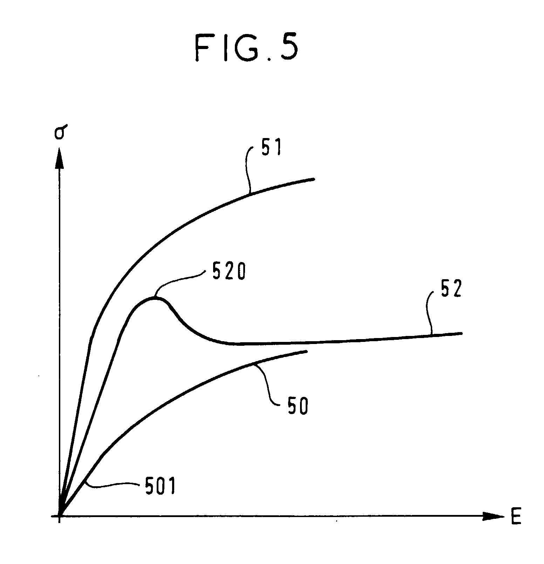

De manière générale, tout matériau ayant un module d'élasticité inférieur à 1500 MPa à 20°C et tel que sa courbe 50 (voir figure 5) contrainte σ-allongement E ne présente pas de seuil d'écoulement, c'est-à-dire qu'elle ne présente pas de maximum après la phase élastique 501 (relation linéaire entre la contrainte et l'allongement, l'allongement étant proportionnel à la contrainte par un facteur égal au module d'élasticité du matériau). Ceci se traduit par le fait que le matériau ne présente pas de seuil au-delà duquel un état de contrainte sensiblement constant provoque une déformation plastique importante. A titre illustratif, la courbe 51 est celle d'un matériau à haut module d'élasticité et sans seuil d'écoulement, et la courbe 52 celle d'un matériau à module d'élasticité intermédiaire avec un seuil d'écoulement 520.

L'épaisseur réduite du ou des tubes 3' permet de réaliser, comme on le voit en comparant les figures 1 et 3 d'une part et 2 et 4 d'autre part, des câbles 30, 40 de dimensions réduites par rapport aux câbles correspondants 10, 20 respectivement de l'art antérieur, à nombre de fibres optiques 2 constant. Ceci permet d'utiliser une épaisseur réduite du renforcement mécanique 6 et de la gaine extérieure 7, et surtout de diminuer le diamètre de l'élément de renfort central 1 des câbles à structure "stranded loose tube".

A titre d'exemple, le câble 10 de la figure 1 de l'art antérieur contient 48 fibres optiques 2 réparties dans un tube 3 ayant un diamètre extérieur de 6 mm et un diamètre intérieur de 4,5 mm, c'est-à-dire une épaisseur de 0,75 mm. Le diamètre extérieur du câble 10 est de 12 mm. Avec un même nombre de fibres optiques, le câble 30 de la figure 3 selon l'invention contient un tube 3' ayant un diamètre extérieur de 5 mm et un diamètre intérieur de 4,5 mm, c'est-à-dire une épaisseur de 0,25 mm, et le diamètre extérieur du câble 30 est de 11 mm.

Un câble Unitube® de l'art antérieur peut aussi contenir 96 fibres optiques regroupées en rubans dans un tube ayant une épaisseur de 1 mm. Un câble correspondant selon l'invention contenant 96 fibres regroupées en rubans comprend un tube d'épaisseur 0,4 mm.

A titre d'exemple encore, le câble 20 de la figure 2 de l'art antérieur contient 72 fibres optiques réparties dans 6 tubes 3 ayant chacun un diamètre extérieur de 2,8 mm et un diamètre intérieur de 1,8 mm, c'est-à-dire une épaisseur de 0,5 mm. Le diamètre extérieur du câble 20 est de 14 mm. Avec un même nombre de fibres optiques, le câble 40 de la figure 4 selon l'invention contient 6 tubes de diamètre extérieur 2 mm et de diamètre intérieur 1,5 mm, c'est-à-dire ayant une épaisseur de 0,25 mm, et le diamètre extérieur du câble 40 est de 10 mm.

De la même manière, à dimensions égales par rapport à un câble de structure comparable de l'art antérieur, un câble selon l'invention contient plus de fibres optiques qu'un câble de l'art antérieur.

Bien entendu, la présente invention n'est pas limitée aux modes de réalisation qui viennent d'être décrits. En particulier, on pourra remplacer les fibres optiques par des rubans dans les unités selon l'invention, ou encore combiner dans une même unité des fibres individuelles et des rubans.

Le matériau du tube peut être quelconque du moment qu'il satisfait les caractéristiques mécaniques spécifiées.

Les tubes 3' des unités 5' peuvent en outre contenir un matériau assurant l'étanchéité sou forme de gel (de filins ou de rubans par exemple) tout en permettant aux fibres ou aux rubans de se déplacer à l'intérieur des tubes.

## Revendications

1. Unité optique (5') pour un câble de télécommunications à fibres optiques (30 ; 40), comprenant un tube (3') en un matériau plastique dans lequel est logée librement au moins une fibre optique (2),
**caractérisée en ce que** ledit tube (3') a une épaisseur inférieure ou égale à 0,5 mm et en ce que ledit matériau a un module d'élasticité inférieur à 1500 MPa à 20°C et une courbe contrainte/allongement sans seuil d'écoulement.

2. Unité optique selon la revendication 1, caractérisée en ce que ledit matériau plastique est choisi parmi le polyéthylène, le polypropylène et le PVC.

3. Unité optique selon l'une des revendications 1 ou 2, caractérisée en ce que dans ledit tube (3') sont logées plusieurs fibres optiques (2) sous forme de faisceaux.

4. Unité optique selon l'une des revendications 1 à 3, caractérisée en ce que dans ledit tube sont logées plusieurs fibres optiques sous forme de rubans.

5. Unité optique selon l'une des revendications 1 à 4, caractérisée en ce qu'elle contient un matériau assurant l'étanchéité sous forme de gel, tout en permettant auxdites fibres ou auxdites rubans de se déplacer à l'intérieur dudit tube (3').

6. Câble de télécommunications à fibres optiques caractérisé en ce qu'il contient au moins une unité (5') selon l'une des revendications 1 à 5.

7. Câble de télécommunications (30) selon la revendication 6, caractérisé en ce qu'il contient une seule unité (5') selon l'une des revendications 1 à 5, disposée le long de son axe longitudinal.

8. Câble de télécommunciations selon la revendication 7, caractérisé en ce que l'épaisseur dudit tube (3') est inférieure ou égale à 0,5 mm.

9. Câble de télécommunications (40) selon la revendication 6, caractérisé en ce qu'il contient plusieurs desdites unités (5') enroulées autour d'un élément de renfort central (1).

10. Câble de télécommunications selon la revendication 9, caractérisé en ce que l'épaisseur desdits tubes (3') est inférieure ou égale à 0,3 mm.

11. Câble de télécommunications selon l'une des revendications 6 à 10 caractérisé en ce qu'il comprend une couche de renfort mécanique (6) entourant ladite unité (5') ou l'ensemble desdites unités, et une gaine de protection extérieure (7) entourant ladite couche de renfort mécanique (6).
